## Europäisches Patentamt

## European Patent Office

## Office européen des brevets

(11) Veröffentlichungsnummer : **0 353 401 B1**

## (12) EUROPÄISCHE PATENTSCHRIFT

(45) Veröffentlichungstag der Patentschrift :
**15.01.92 Patentblatt 92/03**

(51) Int. Cl.$^5$ : **F16B 13/08, F16B 13/04**

(21) Anmeldenummer : **89108184.6**

(22) Anmeldetag : **05.05.89**

(54) Spreizdübel aus Metall.

(30) Priorität : **01.07.88 DE 3822320**

(43) Veröffentlichungstag der Anmeldung :
**07.02.90 Patentblatt 90/06**

(45) Bekanntmachung des Hinweises auf die
Patenterteilung :
**15.01.92 Patentblatt 92/03**

(84) Benannte Vertragsstaaten :
**AT BE CH DE ES FR GB GR IT LI NL SE**

(56) Entgegenhaltungen :
**EP-A- 0 067 941**
**EP-A- 0 225 845**
**DE-A- 3 108 388**
**DE-U- 8 613 998**
**US-A- 3 139 730**

(73) Patentinhaber : **fischer-werke Artur Fischer
GmbH & Co. KG
Weinhalde 14-18
W-7244 Waldachtal 3/Tumlingen (DE)**

(72) Erfinder : **Fischer, Artur, Prof. Dr. h.c.
Weinhalde 34
W-7244 Waldachtal 3/Tumlingen (DE)**

## Beschreibung

Die Erfindung betrifft einen Spreizdübel aus Metall gemäß der Gattung des Anspruches 1.

Aus der DE-OS 3108388 ist ein Spreizdübel aus Metall bekannt, der aus einem Bolzen mit Spreizkörper und einer Spreizhülse besteht. Die Spreizhülse umschließt den Bolzen über seine gesamte Länge und hat zwischen Spreizbereich und ihrem anderen Ende einen verringerten Durchmesser. Diese Durchmesserverringerung soll es ermöglichen, daß der Spreizdübel auch in gekrümmte Bohrlöcher problemlos einsetzbar ist. Durch die Durchmesserverringerung besitzt die Spreizhülse jedoch in diesem Bereich eine reduzierte Wandstärke, die beim Eintreiben der Spreizhülse mittels eines Einschlagwerkzeugs gestaucht werden kann.

Bei dem aus der EP-A 0225845 bekannten Spreizdübel ist über den an seinem vorderen Ende einen Spreizkonus aufweisenden Bolzen eine Spreizhülse gestülpt, deren Länge erheblich kleiner ist als die halbe Länge des Bolzens. Damit befindet sich der größte Teil der Spreizhülse nach der Verankerung des Spreizdübels auf dem Spreizkonus. Der Bolzen ist somit nur in der Bohrlochtiefe, nicht aber im Bereich der Bohrlochmündung gegen die Bohrlochwandung abgestützt. Ein derart verankerter Spreizdübel kann demzufolge nur Zugkräfte aufnehmen. Der bekannte Spreizdübel eignet sich somit nur für Montagen in Decken, wo üblicherweise nur reine Zugkräfte auftreten. Für Montagen an Wänden kann dieser Spreizdübel nicht eingesetzt werden, da durch das Gewicht des zu befestigenden Gegenstandes stets ein hoher Querkraft-Anteil vorliegt, der zu einer Verschiebung des zu befestigenden Gegenstandes bzw. zu einer Verbiegung des Bolzens führen würde.

Der Erfindung liegt die Aufgabe zugrunde, einen Speizdübel aus Metall zu schaffen, der für Wandmontagen geeignet und auch in gekrümmte Bohrlöcher einsetzbar ist, ohne daß eine Stauchung im Bereich der Spreizhülse beim Einschlagen auftritt.

Die Lösung dieser Aufgabe wird durch die im Anspruch 1 angegebenen Merkmale erreicht. Die Spreizhülse hat bezogen auf die gesamte Länge des Befestigungselements eine wesentlich kleinere Länge, so daß die Spreizhülse auch in gekrümmten Bohrlöchern dem Bolzen entlang mittels eines geeigneten Einschlagwerkzeugs bis zum Spreizkörper eingeschlagen werden kann. Da der Schaft des Bolzens einen wesentlich kleineren Durchmesser als die Spreizhülse hat, deren Außendurchmesser dem Bohrlochdurchmesser entspricht, hat der Schaft beim Eintreiben in das Bohrloch genügend Spiel, um Krümmungen der Bohrlochwand ausgleichen zu können. Das Einschlagwerkzeug für die Spreizhülse kann im wesentlichen aus einem dünnwandigen Rohr aus hochwertigem Stahl, vorzugsweise aus gehärtetem Stahl, bestehen. Der Außendurchmesser des Einschlagwerkzeugs kann somit deutlich kleiner sein als der Bohrlochdurchmesser.

Der erfindungsgemäße Spreizdübel besitzt eine auf den Schaft des Bolzens aufschiebbare Zentrierhülse, die den Bolzen im Bereich der Bohrlochöffnung zentriert und lagert. Über die Zentrierhülse werden radial am Bolzen angreifende Kräfte auf das Mauerwerk übertragen. Der Außendurchmesser der Zentrierhülse ist vorzugsweise gleich dem Außendurchmesser der Spreizhülse und entspricht somit dem Bohrlochdurchmesser. Damit die Zentrierhülse fest im Bohrloch eingepreßt wird, kann an einem Teil ihrer Mantelfläche eine Rändelung angebracht sein, die an der Bohrlochwand angreift.

Die Länge der Spreizhülse kann etwa dem doppelten Bolzendurchmesser entsprechen, wobei ein an den geschlitzten Spreizbereich angrenzender Ringabschnitt der Spreizhülse wesentlich kürzer sein kann, als der Spreizbereich. Durch die Verwendung einer möglichst kurzen Spreizhülse ist es möglich, den Spreizdübel auch in stärker gekrümmten Bohrlöchern einsetzen zu können. Stärkere Krümmungen können insbesondere dann auftreten, wenn im Bereich der Bohrung Armierungsstäbe liegen, die beim Bohren den Bohrer seitlich abdrängen.

Die Erfindung wird nachfolgend anhand der Zeichnung näher erläutert.

Es zeigen :

Figur 1    einen Spreizdübel mit Zentrierhülse,
Figur 2    ein Einschlagwerkzeug für den in Figur 1 dargestellten Spreizdübel und
Figur 3    einen fertig montierten spreizdübel.

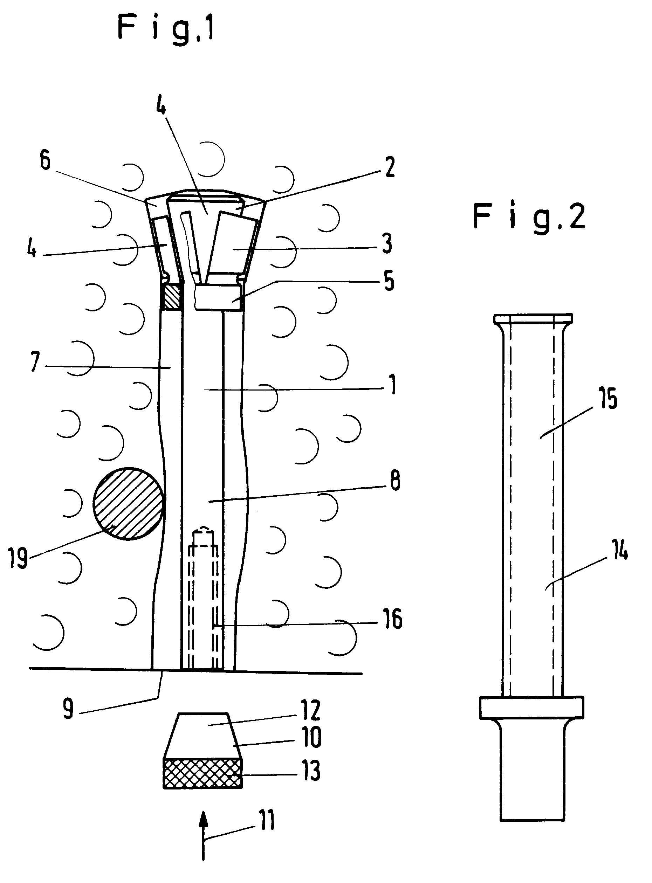

Der in Figur 1 dargestellte Spreizdübel besteht aus einem Stehbolzen 1, der an seinem vorderen Ende einen Spreizkonus 2 aufweist. Über den Stehbolzen 1 ist eine Spreizhülse 3 geschoben, die über ihren Spreizbereich Schlitze 4 besitzt. An den Spreizbereich schließt sich ein Ringabschnitt 5 an.

Die Spreizhülse 3 ist auf den Spreizkonus 2 aufgetrieben, weshalb sie aufgespreizt ist und in eine Hinterschneidung 6 des Bohrlochs 7 formschlüssig eingreift.

Der Schaft 8 des Stehbolzens 1 ist wegen einer geringfügigen Krümmung des Bohrlochs im Bereich der Bohrlochöffnung 9 nicht zentrisch angeordnet. Um eine Zentrierung des Schafts 8 zu erreichen, kann eine Zentrierhülse 10 in Pfeilrichtung 11 auf den Schaft 8 aufgeschoben werden. Dabei bewirkt der konische Teil 12 der Zentrierhülse 10, daß sich der Schaft 8 beim Einschlagen der Zentrierhülse 10 zunehmend mit deren Eindringtiefe zentriert. Am zylindrischen Teil 13 besitzt die Zentrierhülse 10 eine Rändelung, die einen festen Sitz im Bohrloch 7 gewährleistet.

In Figur 2 ist ein Einschlagwerkzeug 14 dargestellt, welches zum Einschlagen und Auftreiben der Spreizhülse 3 dient. Das Einschlagwerkzeug 14 besitzt einen rohrförmigen Teil 15, der den Schaft 8 beim Einschlagen der Spreizhülse 3 übergreift.

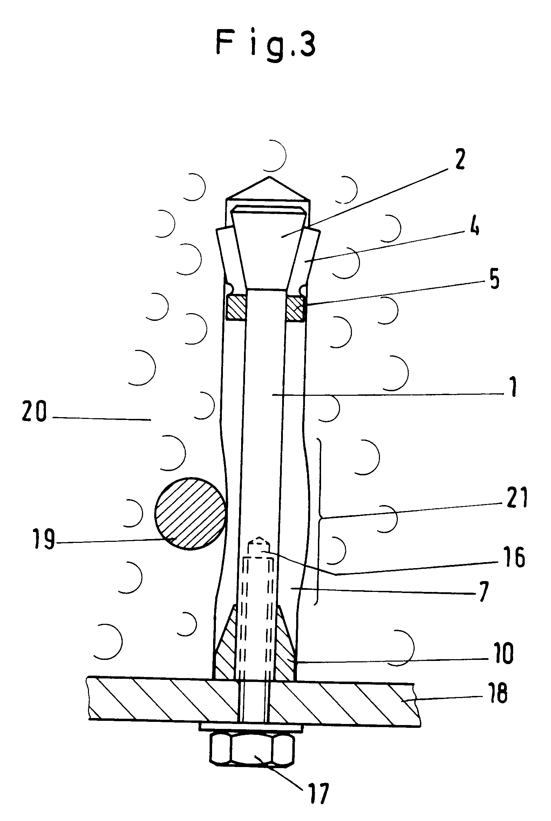

In Figur 3 ist ein fertig montierter Spreizdübel in einem Bohrloch dargestellt, welches nicht hinterschnitten ist.

Am zur Bohrlochöffnung weisenden Ende des Schaftes 8 besitzt dieser ein Innengewinde 16, in das eine Befestigungsschraube 17 eingedreht ist, die eine Platte 18 an der Wandoberfläche festhält.

In Figur 3 ist ebenso wie in Figur 1 der Querschnitt einer Stahl-Armierung 10 dargestellt, die sich im Mauerwerk 20 befindet. Bei der Herstellung des Bohrlochs bewirkt diese Armierung 19, daß der Bohrkopf ausweicht und dadurch ein gekrümmter Bohrlochbereich 21 entsteht.

## Patentansprüche

1. Spreizdübel aus Metall zum Einsetzen in ein Bochloch (7) eines Mauerwerks mit einem an einem Ende eines Bolzens (1) ausgebildeten Spreizkörper (2) und mit einer auf den Bolzen (1) aufgeschobenen Spreizhülse (3), deren Länge kleiner ist als die halbe Länge des Bolzens (1) und die auf den Spreizkörper (2) auftreibbar ist, wobei am anderen Ende des Bolzens (1) eine Befestigungseinrichtung als Gewinde (16) oder dgl. vorgesehen ist, **dadurch gekennzeichnet**, daß eine kurze Zentrierhülse (10) mit Zentrierkonus (12) auf das dem Spreizkörper (2) abgewandte Ende des Bolzens (1) aufgeschoben ist.

2. Spreizdübel nach Anspruch 1, **dadurch gekennzeichnet,** daß der Außendurchmesser der Zentrierhülse (10) gleich dem Außendurchmesser der Spreizhülse (3) ist.

3. Spreizdübel einem der Ansprüche 1 oder 2, **dadurch gekennzeichnet**, daß die Zentrierhülse (10) einen an ihren konischen Teil (12) angrenzenden zylindrischen Teil (13) mit gerändelter Mantelfläche hat.

4. Spreizdübel nach einem der vorhergehenden Ansprüche, **dadurch gekennzeichnet**, daß die Länge der Spreizhülse (3) etwa dem doppelten Bolzendurchmesser entspricht.

5. Spreizdübel nach einem der vorhergehenden Ansprüche, **dadurch gekennzeichnet**, daß die Spreizhülse (3) einen geschlitzten Spreizbereich und einen daran sich anschließenden Ringabschnitt (5) hat, der kürzer ist als der Spreizbereich.

## Claims

1. Expansible plug made of metal for inserting into a drilled hole (7) in masonry, having an expander member (2) formed at one end of a bolt (1) and having an expansible sleeve (3) which is pushed over the bolt (1), is less than half the length of the bolt (1) and can be driven onto the expander member (2), there being provided at the other end of the bolt (1) a securing means in the form of a thread (16) or the like, characterised in that a short centering sleeve (10) having a centering cone (12) is pushed over that end of the bolt (1) that is remote from the expander member (2).

2. Expansible plug according to claim 1, characterised in that the external diameter of the centering sleeve (10) is the same as the external diameter of the expansible sleeve (3).

3. Expansible plug according to claim 1 or claim 2, characterised in that the centering sleeve (10) has adjoining its conical portion (12) a cylindrical portion (13) having a knurled outer surface.

4. Expansible plug according to any one of the preceding claims, characterised in that the length of the expansible sleeve (3) corresponds to approximately twice the diameter of the bolt.

5. Expansible plug according to any one of the preceding claims, characterised in that the expansible sleeve (3) has a slotted expansible region and, adjacent thereto, an annular portion (5) which is shorter than the expansible region.

## Revendications

1. Cheville métallique expansible, destinée à être mise en place dans un trou foré (7) d'un ouvrage de maçonnerie, comportant un corps (2) d'expansion formé à une extrémité d'une tige filetée (1), et, enfilée sur la tige filetée (1), une douille expansible (3), dont la longueur est inférieure à la moitié de la longueur de la tige filetée (1), et qui peut être poussée en force sur le corps (2) d'expansion, un dispositif de fixation étant prévu à l'extrémité de la tige filetée (1), sous forme d'un filetage (16) ou similaire, cheville caractérisée en ce qu'une courte douille (10) de centrage, comportant un cône (12) de centrage, est enfilée sur l'extrémité de la tige filetée (1) située à l'opposé du corps (2) d'expansion.

2. Cheville expansible selon la revendication 1, caractérisée en ce que le diamètre extérieur de la douille (10) de centrage est égal au diamètre extérieur de la douille expansible (3).

3. Cheville expansible selon l'une des revendications 1 ou 2, caractérisée en ce que la douille (10) de centrage a une surface d'enveloppe comportant un moletage sur une partie cylindrique (13) voisine de sa partie conique (12).

4. Cheville expansible selon l'une des revendications précédentes, caractérisée en ce que la longueur de la douille expansible (3) correspond approximativement au double du diamètre de la tige filetée.

5. Cheville expansible selon l'une des revendications précédentes, caractérisée en ce que la douille expansible (3) comporte une zone d'expansion dotée d'une fente, et une partie annulaire (5) qui se raccorde à celle-ci et qui est plus courte que la zone d'expansion.

EP 0 353 401 B1

# Fig.1

# Fig.2

# F i g.3